# FASCICULE DE BREVET EUROPEEN

(11) **EP 3 049 327 B1**
(45) Date de publication et mention de la délivrance du brevet: **09.08.2017**
(21) Numéro de dépôt: 14784324.7
(22) Date de dépôt: 22.09.2014
(51) Int. Cl.: B64C 11/38, B64C 11/48, F15B 15/14

(54) **DISPOSITIF D'ALIMENTATION EN FLUIDE HYDRAULIQUE D'UN VERIN ET MECANISME DE COMMANDE DE PAS DES PALES D'UNE HELICE DE TURBOMOTEUR COMPORTANT LE VERIN**
VORRICHTUNG ZUR ZUFÜHRUNG EINER HYDRAULIKFLÜSSIGKEIT IN EINER DRUCKSTANGE UND MECHANISMUS ZUR STEUERUNG DER NEIGUNG DER SCHAUFELN EINES TURBINENMOTORPROPELLERS MIT DIESER DRUCKSTANGE
DEVICE FOR SUPPLYING HYDRAULIC FLUID TO A RAM AND MECHANISM FOR CONTROLLING THE PITCH OF THE BLADES OF A TURBINE ENGINE PROPELLER COMPRISING THE RAM

(30) Priorité: 24.09.2013 FR 1359183
(43) Date de publication de la demande: 03.08.2016
(73) Titulaire: Safran Aircraft Engines, 75015 Paris (FR)
(72) Inventeur: BELMONTE, Olivier, 77550 Moissy-Cramayel Cedex (FR); CURLIER, Augustin, 77550 Moissy-Cramayel Cedex (FR)
(74) Mandataire: Gevers & Orès
(86) Numéro de dépôt international: PCT/FR2014/052354
(87) Numéro de publication internationale: WO 2015/044572

(56) Documents cités:
- WO-A1-2012/131271
- DE-B- 1 289 638
- DE-U1- 9 301 899
- GB-A- 485 772

## Description

### Domaine de l'invention

La présente invention concerne le domaine des vérins hydrauliques, plus particulièrement des vérins à piston fixe, l'organe commandé par le vérin étant relié au cylindre qui est mobile en translation ; elle porte sur l'agencement des conduits d'alimentation des chambres des vérins en fluide hydraulique. L'invention vise notamment l'application de tels vérins à la commande du pas des pales d'une hélice dans un moteur de propulsion aéronautique, tel qu'un moteur à hélices non carénées.

### Etat de la technique

Dans le but d'améliorer les performances et la consommation spécifique des moteurs de propulsion des aéronefs, une nouvelle architecture est proposée avec un doublet d'hélices contrarotatives, non carénées, disposé soit en amont soit en aval d'un turbomoteur à turbine à gaz. Les moteurs sont aussi désignés par l'expression anglaise « open rotor ». Par exemple, le moteur décrit dans la demande de brevet FR 2941493 comporte un générateur de gaz de turbomoteur classique, dont un ou plusieurs étages de turbine entraînent une soufflante non carénée s'étendant à l'extérieur du moteur. Dans le cas d'un turbomoteur à doublet d'hélices aval, les rotors peuvent aussi être montés sur un élément structural aval du carter et entraînés par une turbine libre au travers d'un boîtier à engrenages par exemple à train d'engrenages épicycloïdal.

Comme dans le cas des turbopropulseurs classiques, les pales des hélices des open-rotors sont à calage variable, c'est à dire que le pas de ces hélices peut être modifié au cours du vol pour faire évoluer la poussée du moteur et optimiser le rendement de l'hélice en fonction de la vitesse de l'aéronef. Des dispositifs multiples ont été imaginés pour faire varier le calage des pales, qui comportent généralement une mise en rotation de la pale autour de son axe principal par l'intermédiaire de pignons coniques, situés sous le pied de la pale. Ces derniers coopèrent avec des pignons coniques d'un système de commande.

Lors des phases de vol, le calage d'une hélice évolue entre deux bornes extrêmes correspondant à une position de petit pas à faible vitesse d'avancement, par exemple de l'ordre de 30° par rapport au plan de rotation des hélices, et une position de grand pas à grande vitesse, par exemple de l'ordre de 65° par rapport à ce même plan de rotation des hélices. Les pales peuvent prendre une position de drapeau qui correspond à un calage supérieur à celui du grand pas, et égal à environ 90°. Dans cette position la traînée induite par les pales est minimale. Les pales peuvent aussi être mises en position d'inversion de poussée et avoir un angle de calage négatif, - 30° par exemple.

La commande du pas des pales peut être effectuée au moyen d'un actionneur (par exemple un vérin télescopique, voir le document DE1289638B1) dont l'organe mobile est mû axialement en translation et entraîne les pivots des pales en rotation autour de leur axe radial respectif par l'intermédiaire d'une tringlerie appropriée, montée sur roulement.
Chacun des deux rotors du doublet d'hélices présente son propre dispositif d'entraînement et de commande de pas. Pour le dispositif du rotor amont, une partie des contraintes est liée à la limitation de l'espace central dû à la nécessité de prévoir un passage pour les servitudes du rotor situé en aval.
La présente invention est motivée par le besoin de prévoir un agencement du dispositif d'actionnement des pales en rotation autour de leur axe qui soit à la fois compact et robuste.

### Exposé de l'invention

On parvient à l'objectif ainsi fixé avec un vérin hydraulique comportant un support, un cylindre mobile en translation par rapport au support, un piston solidaire du support à l'intérieur du cylindre délimitant deux chambres avec le cylindre et un dispositif d'alimentation des chambres en fluide hydraulique à l'amont depuis le support. Ce vérin est caractérisé par le fait que le dispositif d'alimentation comprend des canalisations télescopiques, chaque canalisation télescopique comprenant deux éléments tubulaires, coulissant l'un dans l'autre, un premier élément tubulaire étant solidaire du support à une extrémité et le deuxième élément tubulaire étant solidaire du cylindre en au moins deux points distants l'un de l'autre le long d'une génératrice du cylindre, une desdites chambres étant alimentée par une première canalisation télescopique sur une partie de la course du cylindre et par une deuxième canalisation télescopique sur la partie restante de la course du cylindre.
Le vérin de l'invention présente l'avantage d'être compact radialement dans la mesure où les canalisations d'alimentation en fluide hydraulique sont disposées le long de la surface extérieure du cylindre mobile. Il est en outre robuste et le guidage des pièces mobiles entre elles est bien contrôlé, en particulier celui des éléments tubulaires entre eux. Il s'ensuit que son fonctionnement n'est pas altéré lorsqu'il présente des variations dimensionnelles résultant de phénomènes de dilatation thermique ou bien lorsqu'il subit des déformations résultant de contraintes mécaniques pendant les différentes phases de vol.

L'invention présente un intérêt particulier quand le vérin est annulaire et qu'il faut libérer de l'espace dans le volume intérieur pour laisser le passage à des servitudes qui sont destinées à des équipements situés en aval par rapport au support du vérin.

Conformément à une autre caractéristique, la première canalisation comprend un premier moyen d'obturation agencé pour obturer la canalisation au terme de ladite partie de course, la deuxième canalisation comprend un second moyen d'obturation agencé pour maintenir la canalisation obturée sur ladite partie de course du cylindre et ouverte sur ladite partie restante de course du cylindre.

Avantageusement, le moyen d'obturation de la première ou la deuxième canalisation est formé par la coopération du premier élément tubulaire et du second élément tubulaire de ladite canalisation, le second élément tubulaire présentant un passage mettant en communication le premier élément tubulaire avec ladite chambre, et le premier élément tubulaire présentant des ouvertures qui sont découvertes par ledit passage.

Selon un mode de réalisation, le premier élément tubulaire est fermé à son extrémité et présente lesdites ouvertures latéralement, le deuxième élément tubulaire présente une portion avec un diamètre tel que lesdites ouvertures latérales sont obturées et une portion avec un diamètre plus large de manière à former ledit passage. Notamment, la deuxième canalisation est reliée à ladite chambre par l'intermédiaire d'un élément tubulaire disposé parallèlement à la deuxième canalisation.

Conformément à une autre caractéristique, les premiers éléments tubulaires des canalisations sont reliés au support par une portion en forme de col de cygne.

Le vérin de l'invention trouve une application particulièrement avantageuse dans un mécanisme de commande de pas d'une hélice à calage variable. Le vérin est solidaire, par son support, du stator de l'hélice.

La première canalisation alimente ladite chambre sur une plage de calage de pas et la deuxième canalisation sur une plage d'inversion de poussée de l'hélice.

Conformément à une autre caractéristique, l'autre chambre est alimentée par une troisième canalisation télescopique.

### Brève description des figures

D'autres caractéristiques et avantages ressortiront de la description qui suit d'un mode de réalisation non limitatif de l'invention en référence aux dessins annexés sur lesquels :
La figure 1 représente en coupe axiale le schéma d'un moteur à hélices contrarotatives auquel s'applique l'invention ;
La figure 2 est une représentation schématique d'une commande de pas des pales d'une hélice du moteur de la figure 1 ;
La figure 3 est une vue en perspective du vérin hydraulique de l'invention ;
La figure 4 est une vue en coupe axiale, du vérin de la figure 3 ;
La figure 5 est une vue en coupe transversale du vérin de la figure 3, au niveau du capot amont ;
Les figures 6 à 8 montrent une coupe longitudinale partielle du vérin de la figure 3 au niveau de la première canalisation, de petit pas, dans les différentes phases de fonctionnement du vérin ;
La figure 9 montre une coupe longitudinale partielle du vérin de la figure 3 au niveau de la deuxième canalisation, de pas inverse ;
La figure 10 montre une coupe longitudinale partielle du vérin de la figure 3 au niveau de la canalisation de bipasse ;
La figure 11 montre une coupe longitudinale partielle du vérin de la figure 3 au niveau de la canalisation, de grand pas ;
La figure 12 montre schématiquement le moyen d'obturation de la première canalisation.

### Description détaillée d'un mode de réalisation de l'invention

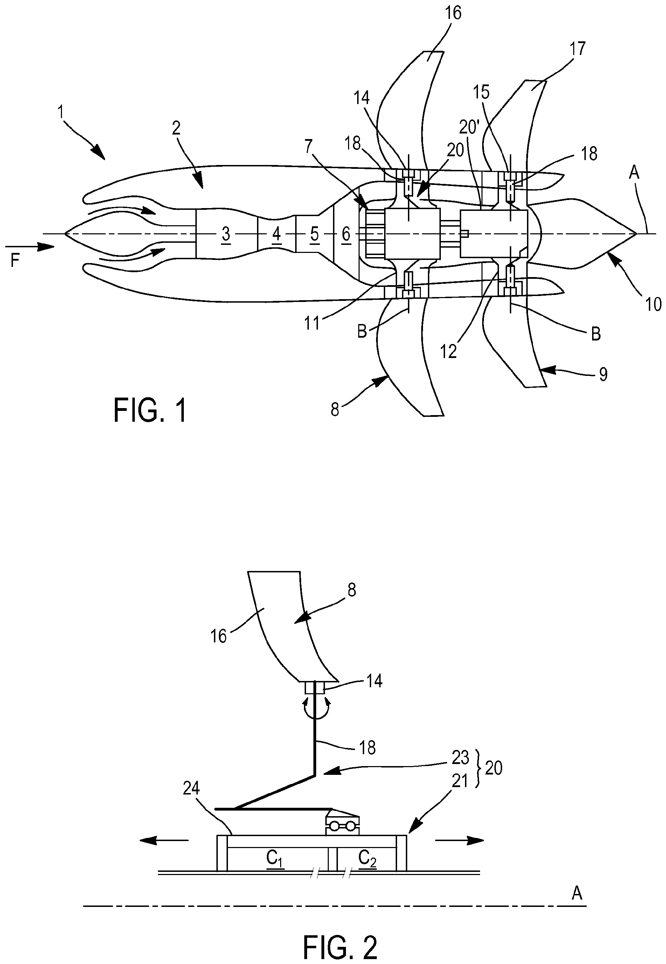

Comme le montre schématiquement la figure 1, le turbomoteur 1 à soufflante non carénée (« open rotor »), d'axe longitudinal A, comporte usuellement, d'amont en aval selon le sens d'écoulement du flux gazeux F à l'intérieur d'une nacelle 2 du turbomoteur, un ou deux compresseurs 3 selon l'architecture du générateur de gaz à simple ou double corps, une chambre annulaire de combustion 4, une turbine haute pression ou deux turbines haute pression et à pression intermédiaire 5 selon ladite architecture, et une turbine basse pression 6 qui entraîne, par l'intermédiaire d'un réducteur ou boîtier à trains épicycloïdaux 7 et de façon contrarotative, deux hélices amont 8 et aval 9 selon le sens du flux F. Les hélices sont alignées dans l'axe longitudinal A du turbomoteur pour constituer la soufflante. Une tuyère 10 d'éjection des gaz forme le corps arrière du moteur, de façon usuelle.

Les hélices sont disposées dans des plans parallèles radiaux, perpendiculaires à l'axe A, et tournent par le biais de la turbine 6 et du boîtier à engrenages 7 dans des sens de rotation opposés. Elles sont montées dans des carters rotatifs 11, 12, par exemple à anneau polygonal tel que décrit dans la demande de brevet FR 12 56 323 du 2 juillet 2012 déposée par le présent déposant, autour duquel sont montés les pieds 14, 15 des pales 16, 17.

Les pales des hélices amont 8 et aval 9 sont à pas à calage variable. Elles sont orientées autour de leur axe radial de pivot B par le moyen d'un mécanisme approprié respectivement 20 et 20', de façon à prendre une position angulaire optimale déterminée en fonction des conditions de fonctionnement du turbomoteur et des phases de vol de l'aéronef.

La description qui suit porte sur le système d'orientation 20 des pales associé à l'hélice amont 8.

Le système d'orientation 20 schématisé sur la figure 2 permet d'effectuer les différentes phases fonctionnelles de l'hélice amont 8 rappelées précédemment : rotation des pales dans les deux sens avec un pas croissant, décroissant et inverse, ainsi que le retour des pales en position drapeau en cas de dysfonctionnement.

À cet effet, il comprend un vérin hydraulique annulaire d'axe A, à déplacement linéaire 21 et dont le corps 24 mobile en translation est formé par le cylindre, le piston du vérin restant fixe. Le mouvement de translation du vérin est transmis par un mécanisme de transmission 23 reliant le corps 24 du vérin aux arbres radiaux 18 des pieds 14 des pales 16 de l'hélice 8. Ce mécanisme comprend un roulement, dont la bague intérieure est solidaire du corps 24, et un ensemble de bielles reliant la bague extérieure aux arbres radiaux qui sont ainsi entraînés en rotation autour de leur axe respectif par le mouvement de translation du corps du vérin.

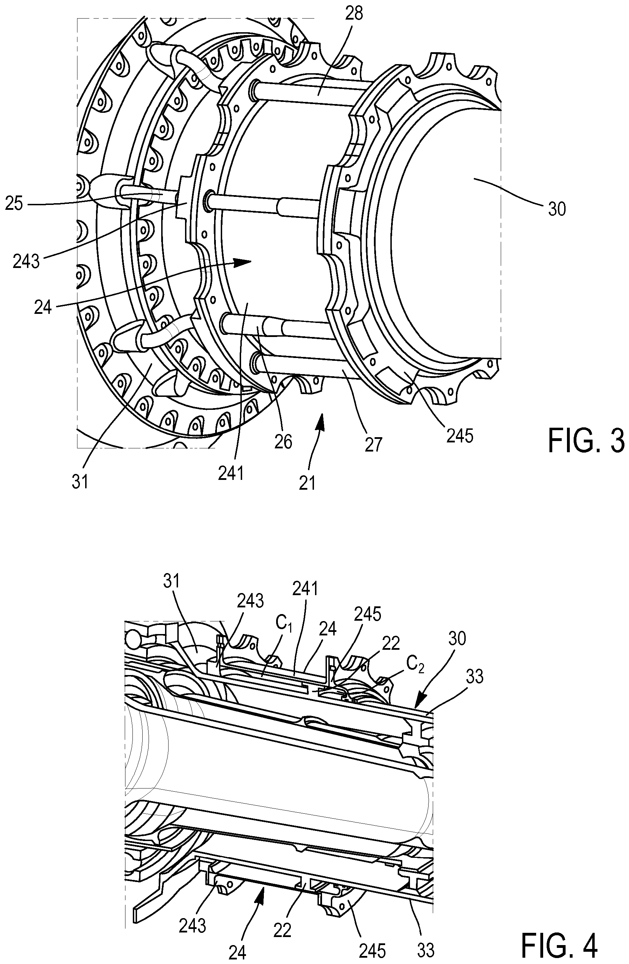

La figure 3 est une vue en perspective de l'extérieur du vérin 21 avec son cylindre 24. La figure 4 qui est une coupe axiale de la vue de la figure 3 en montre l'intérieur. Le cylindre 24 est mobile en translation sur un support tubulaire 30 qui forme le support fixe du vérin. Sur la figure 4 on voit à l'intérieur du support fixe 30, une partie de l'arbre d'entraînement du rotor aval ainsi que l'enveloppe par laquelle transitent les servitudes pour le rotor aval. Le support fixe 30 comprend en amont du vérin 21 une virole 31 par laquelle les fluides de commande du vérin sont distribués. Le support est dit fixe car il est solidaire de la partie statorique du turbomoteur.

Le vérin 21 comprend donc un cylindre qui est formé ici, dans ce mode de réalisation, d'une partie cylindrique 241, d'un capot amont 243 et d'un capot aval 245. Le cylindre 24 coulisse sur la partie tubulaire 33 du support fixe 30. Une cloison 22 est solidaire de cette partie tubulaire 33 et forme avec le cylindre 24 deux chambres : C1 et C2. C1 est la chambre amont du côté de la virole 31 du support.

On distingue sur la figure 3 trois premiers éléments tubulaires solidaires par leur extrémité amont de la virole 31 ainsi que quatre éléments tubulaires solidaires du cylindre et par lesquels les deux chambres C1 et C2 sont alimentées respectivement.

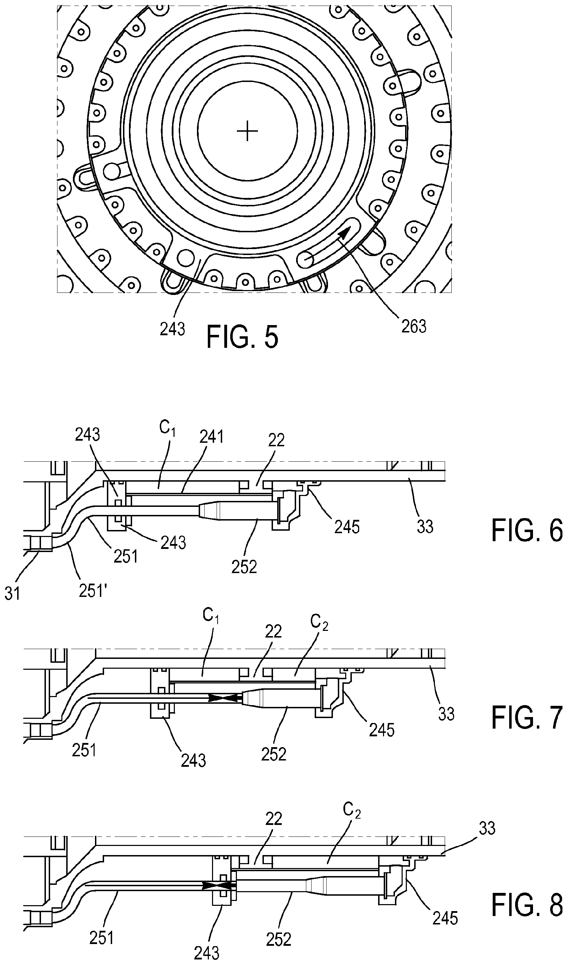

Sur les figures 6 à 8, une première canalisation, dite de petit pas 25 est formée d'un premier élément tubulaire, de petit pas, 251 et d'un deuxième élément tubulaire, de petit pas, 252. Le premier élément tubulaire de petit pas est solidaire de la virole 31 par laquelle il est alimenté en fluide hydraulique et coulisse à l'intérieur du deuxième élément tubulaire de petit pas 252 qui est solidaire du cylindre 24 et communique avec la chambre C2, à l'aval.

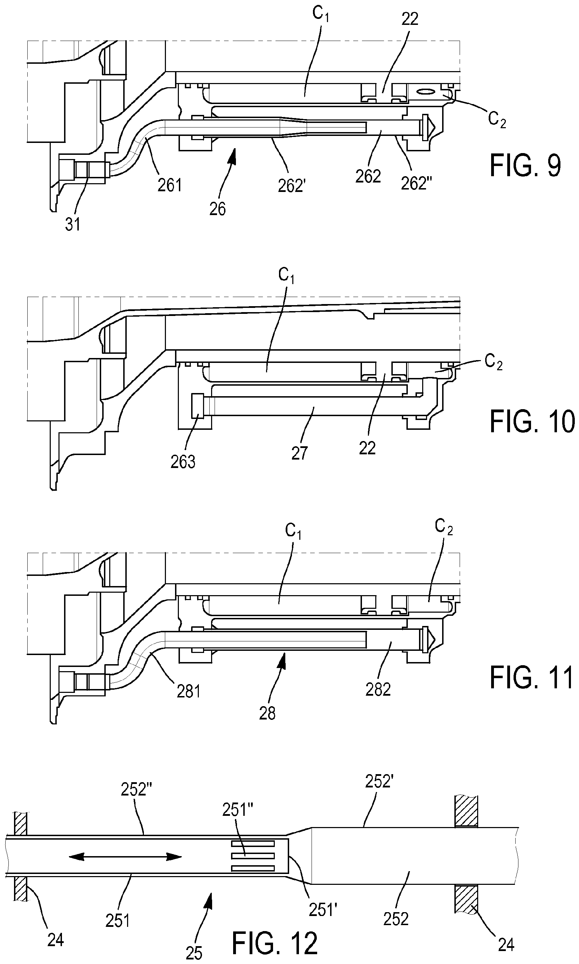

Sur la figure 9, une deuxième canalisation, dite de pas inverse, 26 est formée d'un premier élément tubulaire de pas inverse 261 et d'un deuxième élément tubulaire de pas inverse 262. Le premier élément tubulaire de pas inverse 261 est solidaire de la virole 31 par laquelle il est alimenté en fluide hydraulique et coulisse à l'intérieur du deuxième élément tubulaire de pas inverse 262 qui est solidaire du cylindre 24 et communique avec la chambre C2, à l'aval. Il communique avec la chambre C2 par l'intermédiaire d'une canalisation 27, dite de bipasse ; le fonctionnement en sera expliqué plus loin. Le deuxième élément tubulaire de pas inverse 262 communique avec la canalisation 27 au niveau du capot amont 243 par un canal 263 comme cela est visible sur la coupe transversale de la figure 3 représentée sur la figure 5.

Une troisième canalisation, dite de grand pas, 28 est formée d'un premier élément tubulaire de grand pas 281 et d'un deuxième élément tubulaire de grand pas 282. Le premier élément tubulaire de grand pas 281 est solidaire de la virole 31 par laquelle il est alimenté en fluide hydraulique et coulisse à l'intérieur du deuxième élément tubulaire de grand pas 282 qui est solidaire du cylindre 24 et communique avec la chambre C1 à l'amont.

Les trois premiers éléments tubulaires 251, 261 et 281 sont fixés par tout moyen approprié dans leur logement respectif ménagé dans la virole 31. Ils communiquent avec une source de fluide sous pression par l'intermédiaire d'organes de commande qui ne sont pas décrits ici.

Les trois deuxièmes éléments tubulaires 252, 262 et 282 ainsi que la canalisation de bipasse 27 sont solidaires du cylindre 24 et conformément à une caractéristique de l'invention sont respectivement retenus sur le cylindre 24 en deux points sur une génératrice de celui-ci qui sont distants l'un de l'autre. Plus particulièrement les deux points se situent à leurs extrémités au niveau, ici, des capots amont et aval, 243 et 245 respectivement. D'autres modes de réalisation de l'installation des deuxièmes éléments tubulaires sont possibles ; par exemple les deuxièmes éléments tubulaires peuvent être au moins en partie usinés dans la masse de l'un des éléments constitutifs du cylindre.

L'avantage de la solution de l'invention est d'assurer, pour chaque canalisation, un guidage efficace du premier élément tubulaire lorsque celui-ci coulisse à l'intérieur du deuxième élément tubulaire. Lorsque l'aéronef est en vol, le support fixe 30 ainsi que l'ensemble des pièces de la structure du moteur sont soumis à des contraintes susceptibles de modifier l'orientation axiale d'une pièce par rapport à l'autre ; par exemple la partie tubulaire 33 du support 30 peut fléchir par rapport à la virole 31. Sans ce guidage, les déformations relatives entre les pièces seraient susceptibles de bloquer le mouvement du cylindre par rapport au support fixe.

Il est à noter que les premiers éléments tubulaires sont reliés à la virole par une portion de tube en forme de col de cygne avec un double coude. Cela résulte de la différence de diamètre entre le cylindre 24 et les sorties de distribution de fluide agencées sur la virole 31. Cette disposition a l'avantage de permettre d'absorber localement les différences de dilatation et autres déformations entre les premiers éléments tubulaires 251, 261 et 281 et les autres pièces.

On décrit maintenant le mode de fonctionnement de cet assemblage et comment l'alimentation des deux chambres est effectuée dans les différentes phases de vol de l'aéronef, sur lequel le turbomoteur est monté, de manière à garantir un fonctionnement fiable du mécanisme de commande de pas des pales.

L'augmentation de volume de la chambre aval C2 conduit à déplacer le cylindre 24 vers la droite par rapport à la cloison fixe 22, tel que représenté sur les figures. Ce déplacement correspond sur une partie de la course du cylindre, à une réduction du pas des pales qui en fonctionnement normal va du grand pas au petit pas en vol puis à un réglage du petit pas au sol entre par exemple 65, 30 et 0° puis, sur la partie restante de la course du cylindre, au passage en position inverse, à -30° par exemple, où la poussée produite par l'hélice est inversée pour assister le freinage au sol à l'atterrissage.

Conformément à une autre caractéristique de l'invention, la solution qui va être décrite permet de garantir que le passage du calage positif des pales à la position en inverseur de poussée ne peut être obtenu de façon non volontaire et accidentelle.

La figure 6 montre la position du vérin en butée, à gauche sur la figure, correspondant à un calage extrême, en drapeau, à 90°. Il s'agit d'un calage de sécurité visant à réduire la traînée de l'hélice en cas de défaillance du système de commande de pas. Quand le vérin 24 se déplace depuis cette position vers la droite, l'angle de calage diminue jusqu'à devenir négatif en passant par 0°, qui est le plan de rotation de l'hélice. Plus précisément, il s'agit dans cette figure d'une coupe longitudinale le long de la première canalisation, de petit pas, 25. On note que le premier élément tubulaire de petit pas 251 coulisse dans le second élément tubulaire de petit pas 252. La figure 7 montre que le vérin a été déplacé vers la droite, ici il s'agit de la position à 0° de calage, et d'une butée de fonctionnement. Entre la figure 6 et la figure 7 le fluide hydraulique est venu du premier élément tubulaire 251 jusque dans la chambre C2. Une lumière radiale ménagée dans le capot aval 245 assure le passage de fluide du deuxième élément tubulaire 252 vers la chambre C2. Un moyen d'obturation de la première canalisation de petit pas a été prévu de manière à éviter que dans cette phase de fonctionnement cette position extrême de pas positif soit dépassée vers les pas négatifs. Il s'agit en effet d'éviter qu'une inversion de poussée soit commandée de manière intempestive, voir les figures 6 à 8.

Avantageusement, ce moyen d'obturation de la canalisation de petit pas est réalisé simplement de la façon suivante et illustré sur la figure 12.

Le premier élément tubulaire 251 est fermé à son extrémité 251' opposée à la virole 31. Il présente des lumières latérales 251" à proximité de celle-ci, comme cela est visible sur la figure 12. Par ailleurs le deuxième élément tubulaire 252 présente deux parties de diamètres différents la première partie 252' est de diamètre supérieur à celui du premier élément tubulaire 251. De cette façon les lumières sont libres et le fluide peut s'écouler du premier élément tubulaire 251 vers le deuxième élément tubulaire 252 et plus précisément la partie élargie 252' de cet élément. Ainsi dans la plage des pas comprise entre 90° et 0° la chambre aval C2 est alimentée par la première canalisation de petit pas 25. Lorsque le pas vient à 0° la canalisation 25 se ferme en raison de la fermeture des lumières 251 " par la partie de faible diamètre 252" du deuxième élément tubulaire 252. Quelle que soit la pression appliquée au premier élément tubulaire celle-ci n'est plus transmise à la chambre aval C2 dont le volume ne progresse plus.

Le dépassement de cette position correspond à un passage directement en inverseur de pas. Celui-ci n'est commandé que par la deuxième canalisation d'inversion de pas 262 en combinaison avec la canalisation de bipasse 27.

La canalisation de pas inverse 26 a la même structure que la première mais en étant inversée d'amont en aval. Le deuxième élément tubulaire 262 présente une partie de grand diamètre 262' et une portion de faible diamètre 262". Tandis que le premier élément tubulaire a son extrémité obturée tout en présentant des lumières latérales, le moyen d'obturation est ainsi semblable à celui de la première canalisation mais inversé. Pendant la phase de réglage du pas, la canalisation est obturée, cela tant que la portion de faible diamètre 262" du deuxième élément tubulaire 262 obture les lumières latérales du premier élément tubulaire 261. Les deux moyens d'obturation des canalisations 25 et 26 sont coordonnés de manière à ce que dans le déplacement, par exemple vers un pas de 0°, la fermeture de l'un correspond à l'ouverture de l'autre. Il s'ensuit que lorsque le pas est en butée en position 0° une action positive est nécessaire pour pouvoir passer à la position inverse, et inversement. Cette action positive résulte de la commande de pas inverse par la deuxième canalisation 26.

Lorsque la commande passe à la position inverse, le fluide hydraulique passe par la canalisation de pas inverse 26 puis par le bipasse vient alimenter la chambre aval C2. Par l'agencement de l'invention, le passage en position inverse implique que le vérin soit d'abord parvenu à la position à 0° puis reçoive une alimentation à la pression spécifique de pas inverse par la deuxième canalisation 26, de pas inverse. Le fluide passe de la canalisation 26 par l'élément tubulaire 261 puis par les lumières latérales de l'élément 261 vers la portion 262' de plus grand diamètre de l'élément tubulaire 262, à la canalisation 27 par le canal de bipasse 263, voir figure 5. La figure 8 montre que le vérin s'est déplacé vers la droite bien que la canalisation 25 soit obturée. L'alimentation de la chambre a été rendue possible par la canalisation de pas inverse 26, figure 8, combinée à la canalisation de bipasse 27, figures 9 et 10.

La figure 11 montre la troisième canalisation, dite de grand pas, 28. Le premier élément tubulaire 281 de la canalisation 28 coulisse à l'intérieur de l'élément tubulaire 282 pour alimenter la chambre amont C1. Il s'agit de ramener le pas depuis le pas d'inversion de poussée jusqu'à la mise en drapeau. Le cas échéant, le fluide, venant du dispositif de commande amont, est guidé à l'intérieur de l'élément 281 puis entre ce dernier et le deuxième élément tubulaire 282 qui est de plus grand diamètre.

Par l'invention on obtient ainsi un système de commande de pas d'une hélice qui est compact, en étant de faible encombrement radial tout en ménageant un espace central suffisant pour le passage d'autre canalisation. Ce système est robuste car peu sensible par sa structure aux variations dimensionnelles et aux fléchissements axiaux. Enfin il garantit un fonctionnement fiable.

## Revendications

1. Vérin hydraulique comportant un support (30), un cylindre (24) mobile en translation par rapport au support, un piston (22) solidaire du support à l'intérieur du cylindre délimitant deux chambres (C1, C2) avec le cylindre (24) et un dispositif d'alimentation des chambres en fluide hydraulique à l'amont depuis le support (30, 31), où le dispositif d'alimentation comprend des canalisations télescopiques (25, 26, 28), chaque canalisation télescopique comprenant deux éléments tubulaires, (251, 261, 281 ; 252, 262, 282) coulissant l'un dans l'autre, un premier élément tubulaire étant solidaire du support à une extrémité et le deuxième élément tubulaire étant solidaire du cylindre en au moins deux points distants l'un de l'autre le long d'une génératrice du cylindre, une desdites chambres (C1, C2) étant alimentée par une première canalisation télescopique (25) sur une partie de la course du cylindre, **caractérisé en ce que** la même chambre (C1,C2) est alimentée par une deuxième canalisation (26, 27) télescopique sur la partie restante de la course du cylindre (24).

2. Vérin hydraulique, selon la revendication 1, dont la première canalisation (25) comprend un premier moyen d'obturation agencé pour obturer la canalisation au terme de ladite partie de course, la deuxième canalisation (26) comprend un second moyen d'obturation agencé pour maintenir la deuxième canalisation obturée sur ladite partie de course du cylindre et ouverte sur ladite partie restante de course du cylindre.

3. Vérin, selon la revendication 2, dont le moyen d'obturation de la première (25) ou la deuxième canalisation (26) est formé par la coopération du premier élément tubulaire (251, 261) et du second élément tubulaire (252, 262) de ladite canalisation, le second élément tubulaire présentant un passage mettant en communication le premier élément tubulaire avec ladite chambre, et le premier élément tubulaire présentant des ouvertures qui sont découvertes par ledit passage.

4. Vérin, selon la revendication 3, dont le premier élément tubulaire (251, 261) est fermé à son extrémité opposée à la virole (31) et présente lesdites ouvertures latéralement, le deuxième élément tubulaire présente une portion (252", 262") avec un diamètre tel que lesdites ouvertures latérales sont obturées et une portion (252', 262') avec un diamètre plus large de manière à former ledit passage.

5. Vérin hydraulique, selon l'une des revendications 1 à 4, dont la deuxième canalisation (26) est reliée à ladite chambre par l'intermédiaire d'une canalisation (27) disposée parallèlement à la deuxième canalisation.

6. Vérin, selon l'une des revendications 1 à 5, dont les premiers éléments tubulaires des canalisations sont reliés au support (30) par une portion en forme de col de cygne.

7. Mécanisme de commande de pas d'une hélice à calage variable comprenant un vérin selon l'une des revendications 1 à 6, le vérin étant solidaire de la partie statorique de l'hélice.

8. Mécanisme, selon la revendication 7, dont la première canalisation (25) dite de petit pas, alimente ladite chambre (C2) sur une plage de calage de pas et la deuxième canalisation (216, 27) dite d'inversion de pas, sur une plage d'inversion de poussée de l'hélice.

9. Mécanisme, selon l'une des revendications 7 ou 8, dont l'autre chambre (C1) est alimentée par une troisième canalisation télescopique (28), dite de grand pas, avec un premier élément tubulaire (281) solidaire du support fixe et un deuxième élément tubulaire (282) communiquant avec ladite autre chambre (C1).

## Patentansprüche

1. Hydraulischer Stellantrieb, der einen Träger (30), einen Zylinder (24), der in Translation relativ zu dem Träger bewegbar ist, ein Kolben (22), der mit dem Träger im Innern des Zylinders verbunden ist, wobei er zwei Kammern (C1, C2) mit dem Zylinder (24) abgrenzt, und eine Vorrichtung zur Einspeisung von Hydraulikflüssigkeit in die Kammern stromaufwärts von dem Träger (30, 31) umfasst, wobei die Vorrichtung zur Einspeisung teleskopische Rohre (25, 26, 28) umfasst, wobei jedes teleskopisches Rohr zwei rohrförmig e Elemente (251, 261, 281; 252, 262, 282) umfasst, von denen eines in dem anderen gleitet, wobei ein erstes rohrförmig es Element mit dem Träger an einem Ende verbunden ist, und wobei das zweite rohrförmige Element mit dem Zylinder an mindestens zwei Punkten verbunden ist, die weit voneinander entfernt entlang einer Mantellinie des Zylinders sind, wobei eine der Kammern (C1, C2) durch ein erstes teleskopisches Rohr (25) über einen Hubabschnitt des Zylinders gespeist wird, **dadurch gekennzeichnet, dass** die gleiche Kammer (C1, C2) durch ein zweites teleskopisches Rohr (26, 27) über den verbleibenden Hubabschnitt des Zylinders (24) gespeist wird.

2. Hydraulischer Stellantrieb nach dem Anspruch 1, wobei das ersten Rohr (25) ein erstes Verschlussmittel umfasst, das eingerichtet ist, das Rohr hinsichtlich des Hubabschnitts zu verschließen, wobei das zweite Rohr (26) ein zweites Verschlussmittel umfasst, das eingerichtet ist, das zweite Rohr über den Hubabschnitt des Zylinders verschlossen und über den verbleibenden Hubabschnitt des Zylinders offen zu halten.

3. Stellantrieb nach Anspruch 2, wobei das Verschlussmittel des ersten (25) oder des zweiten Rohrs (26) durch das Zusammenwirken des ersten rohrförmigen Elements (251, 261) und des zweiten rohrförmigen Elements (252, 262) des Rohrs gebildet ist, wobei das zweite rohrförmige Element einen Durchgang aufweist, der das erste rohrförmige Element mit der Kammer verbindet, und wobei das erste rohrförmige Element Öffnungen aufweist, die durch den Durchgang freigelegt werden.

4. Stellantrieb nach Anspruch 3, wobei das erste rohrförmige Element (251, 261) an seinem Ende gegenüber dem Ring (31) geschlossen ist und die seitlichen Öffnungen aufweist, wobei das zweite rohrförmige Element einen Abschnitt (252", 262") mit einem Durchmesser derart, dass die seitlichen Öffnungen verschlossen sind, und einen Abschnitt (252', 262') mit einem größeren Durchmesser aufweist, um den Durchgang zu bilden.

5. Stellantrieb nach einem der Ansprüche 1 bis 4, wobei das zweite Rohr (26) mit der Kammer mittels eines Rohrs (27) verbunden ist, das parallel zu dem zweiten Rohr angeordnet ist.

6. Stellantrieb nach einem der Ansprüche 1 bis 5, wobei die ersten rohrförmigen Element der Rohre mit dem Träger (30) über einen Abschnitt in der Form eines Schwanenhalses verbunden sind.

7. Mechanismus zur Steuerung des Winkels eines variabel verstellbaren Propellers, der einen Stellantrieb nach einem der Ansprüche 1 bis 6 umfasst, wobei der Stellantrieb mit dem Statorteil des Propellers verbunden ist.

8. Mechanismus nach Anspruch 7, wobei das so genannte erste Rohr (25) des kleinen Winkels die Kammer (C2) auf einem Bereich der Winkeleinstellung speist, und das so genannte zweiten Rohr (216, 27) der Winkelumkehr über einen Bereich der Schubumkehr des Propellers.

9. Mechanismus nach einem des Anspruch 7 oder 8, wobei die weitere Kammer (C1) von einem so genannten dritten teleskopischen Rohr (28) des großen Winkels gespeist wird, wobei ein erstes rohrförmiges Element (281) mit dem festen Träger verbunden ist, und wobei ein zweites rohrförmiges Element (282) mit der weiteren Kammer (C1) verbunden ist.

## Claims

1. Hydraulic actuator comprising a support (30), a cylinder (24) which is translatably movable relative to the support, a piston (22) which is rigidly connected to the support inside the cylinder and delimits two chambers (C1, C2) with the cylinder (24), and a device for supplying the chambers with hydraulic fluid upstream from the support (30, 31), wherein the supply device comprises telescopic pipes (25, 26, 28), each telescopic pipe comprising two tubular elements (251, 261, 281; 252, 262, 282) which slide one inside the other, a first tubular element being rigidly connected to the support at one end and the second tubular element being rigidly connected to the cylinder at at least two points which are remote from one another along a generatrix of the cylinder, one of said chambers (C1, C2) being supplied with fluid via a first telescopic pipe (25) on one portion of the travel of the cylinder, **characterised in that** the same chamber (C1, C2) is supplied with fluid via a second telescopic pipe (26, 27) on the remaining portion of the travel of the cylinder (24).

2. Hydraulic actuator according to claim 1, wherein the first pipe (25) comprises a first closure means which is arranged so as to close the pipe at the end of said travel portion and the second pipe (26) comprises a second closure means which is arranged so as to keep the second pipe closed on said travel portion of the cylinder and open on said remaining travel portion of the cylinder.

3. Actuator according to claim 2, wherein the closure means of the first (25) or the second pipe (26) is formed by the first tubular element (251, 261) and the second tubular element (252, 262) of said pipe interacting, the second tubular element having a passage connecting the first tubular element to said chamber, and the first tubular element having openings which are uncovered by said passage.

4. Actuator according to claim 3, wherein the first tubular element (251, 261) is closed at its end opposite the collar (31) and has said openings on the side, the second tubular element has a portion (252", 262") having such a diameter that said lateral openings are closed and a portion (252', 262') having a wider diameter so as to form said passage.

5. Hydraulic actuator according to any of claims 1 to 4, wherein the second pipe (26) is connected to said chamber by means of a pipe (27) which is arranged in parallel with the second pipe.

6. Actuator according to any of claims 1 to 5, wherein the first tubular elements of the pipes are connected to the support (30) by a swan-neck-shaped portion.

7. Mechanism for controlling the pitch of a variable-pitch propeller, comprising an actuator according to any of claims 1 to 6, the actuator being rigidly connected to the stator portion of the propeller.

8. Mechanism according to claim 7, wherein the first pipe (25), referred to as a low-pitch pipe, supplies said chamber (C2) with fluid over a pitch-setting range, and the second pipe (216, 27), referred to as a pitch-inversion pipe, supplying said chamber with fluid over a thrust-inversion range of the propeller.

9. Mechanism according to either claim 7 or claim 8, wherein the other chamber (C1) is supplied with fluid via a third telescopic pipe (28), referred to as a high-pitch pipe, having a first tubular element (281) which is rigidly connected to the stationary support and a second tubular element (282) which communicates with said other chamber (C1).
